(19) Europäisches Patentamt
European Patent Office
Office européen des brevets

(11) **EP 3 574 458 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **18701011.1**

(22) Anmeldetag: **17.01.2018**

(51) Internationale Patentklassifikation (IPC):
**G06Q 10/06** (2023.01)        **G06Q 50/06** (2012.01)

(52) Gemeinsame Patentklassifikation (CPC):
**G06Q 10/0631; G06Q 50/06**

(86) Internationale Anmeldenummer:
**PCT/EP2018/051066**

(87) Internationale Veröffentlichungsnummer:
**WO 2018/137980 (02.08.2018 Gazette 2018/31)**

(54) **VERFAHREN ZUR EINSATZPLANUNG VON BETRIEBSMITTELN EINES ELEKTRISCHEN SYSTEMS ZUR ENERGIEVERSORGUNG UND ELEKTRISCHES SYSTEM ZUR ENERGIEVERSORGUNG**

METHOD FOR THE USAGE PLANNING OF OPERATING EQUIPMENT OF AN ELECTRICAL SYSTEM FOR SUPPLYING ENERGY AND ELECTRICAL SYSTEM FOR SUPPLYING ENERGY

PROCÉDÉ DE PLANIFICATION D'ÉQUIPEMENT DE FONCTIONNEMENT D'UN SYSTÈME ÉLECTRIQUE DESTINÉ À L'ALIMENTATION ÉLECTRIQUE ET SYSTÈME ÉLECTRIQUE DESTINÉ À L'ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2017   DE 102017101413**

(43) Veröffentlichungstag der Anmeldung:
**04.12.2019   Patentblatt 2019/49**

(73) Patentinhaber: **Maschinenfabrik Reinhausen GmbH**
**93059 Regensburg (DE)**

(72) Erfinder: **VIERECK, Karsten**
**93049 Regensburg (DE)**

(56) Entgegenhaltungen:
**WO-A1-2009/042581     DE-A1- 10 316 424**

• **Markus Bauer: "Individuelles Online-Monitoring für Transformatoren", , 19. Februar 2014 (2014-02-19), XP055461717, Gefunden im Internet: URL:https://www.reinhausen.com/de/desktopdefault.aspx/tabid-42/16_read-6758/ [gefunden am 2018-03-21]**

• **Markus Bauer: "Vattenfall setzt im Kraftwerk Boxberg auf das MR-Flottenmonitoring TESSA", , 18. Mai 2016 (2016-05-18), XP055461725, Gefunden im Internet: URL:https://www.reinhausen.com/de/desktopdefault.aspx/tabid-42/16_read-7985/ [gefunden am 2018-03-21]**

• **Anonymous: "Tessa (R) Details - Tessa Lightbox", , 15 September 2016 (2016-09-15), pages 1-1, XP055794650, Retrieved from the Internet: URL:https://web.archive.org/web/20160915132119/https://www.reinhausen.com/en/desktopdefault.aspx/tabid-1731/2399_read-6659 [retrieved on 2021-04-13]**

• **Anonymous: "TESSA  Details", , 2 April 2014 (2014-04-02), XP055784566, Retrieved from the Internet: URL:https://www.reinhausen.com/en/desktopdefault.aspx/tabid-1731 [retrieved on 2021-03-11]**

• **Anonymous: "1", , 2 April 2014 (2014-04-02), pages 1-1, XP055794596, Internet Retrieved from the Internet: URL:https://www.reinhausen.com/en/desktopdefault.aspx/tabid-1731 [retrieved on 2021-04-13]**

**Beschreibung**

Die Erfindung betrifft ein Verfahren zur Einsatzplanung von Betriebsmitteln eines elektrischen Systems zur Energieversorgung. Derartige Systeme umfassen eine Vielzahl von Betriebsmitteln wie z.B. Freileitungen, Transformatoren, Schaltanlagen, Blindleistungskompensationsanlagen, Filtern, Anlagen zur unterbrechungsfreien Stromversorgung (USV).

Ferner betrifft die Erfindung ein elektrisches Systems zur Energieversorgung.

Wichtige Größen zur Einsatzplanung dieser Betriebsmittel sind unter anderem die Verfügbarkeit des elektrischen Systems sowie die Stabilität des elektrischen Systems.

Die Verfügbarkeit des elektrischen Systems wird im Folgenden als die Zeit pro Jahr betrachtet, in der das System seiner konstruktiven Bestimmung nach eingesetzt wird. Die Verfügbarkeit wird hauptsächlich durch Spannungsunterbrechungen aufgrund von Netzausfällen oder Störungen des elektrischen Systems beeinträchtigt.

Die Stabilität des elektrischen Systems wird im Folgenden als dessen Fähigkeit betrachtet, bei gegebenem Anfangs-Betriebszustand nach einer Störung einen Gleichgewichts-Betriebszustand wiederzuerlangen, wobei die meisten Variablen beschränkt sind und praktisch das gesamte System intakt bleibt.

Um eine höchstmögliche Verfügbarkeit sowie Stabilität zu gewährleisten, sind die Betreiber solcher Systeme verpflichtet, verschiedene Anforderungen zu erfüllen. Die wichtigste dieser Anforderungen ist das sogenannte (N-x)-Kriterium, das besagt, dass bei Ausfall einer Anzahl x von Betriebsmitteln des Systems der Betrieb oder die Funktionstüchtigkeit des Gesamtsystems sicher gewährleistet sein muss.

WO 2004 090 764 A1 beschreibt ein Verfahren zur systematischen Bewertung und Einstufung technischer Betriebsmittel mittels einer Datenverarbeitungseinrichtung, wobei schrittweise

- für das jeweilige technische Betriebsmittel wenigstens ein erster Datensatz mit wirtschaftlich relevanten Eingangskenngrößen sowie wenigstens ein zweiter Datensatz mit technisch relevanten Eingangskenngrößen erfasst und/oder ermittelt wird,
- für jeden Datensatz durch wissensbasiert vorbestimmte numerische und/oder logische
- Verknüpfungen sowie wissensbasiert vorbestimmte betriebsmittelspezifische Wichtungsfaktoren die ermittelten Eingangskenngrößen zu jeweils einer wirtschaftlichen Bewertungskenngröße Flx und einer technischen Bewertungskenngröße Rlx zusammengeführt werden, und
- aus den ermittelten Bewertungskenngrößen durch wissensbasiert vorbestimmte numerische Verknüpfungen und Wichtungsfaktoren resultierend eine einzige Gesamtbewertungskenngröße Elx zur Validierung des jeweiligen technischen Betriebsmittels bestimmt wird.

Anhand dieser Gesamtbewertungsgröße Elx ist das System zur systematischen Zustandsbewertung Starkstromtechnischer Betriebsmittel, insbesondere von Transformatoren, einsetzbar.

Die den technisch relevanten oder technischen Eingangskenngrößen jeweils zugehörigen Eingangskennwerte oder -daten geben für gewöhnlich die bestmögliche subjektive Einschätzung des jeweiligen Bewerters und/oder Anwenders wieder und basieren maßgeblich auf dessen Fachkenntnissen und/oder Erfahrungswerten. Die zur Bestimmung der wirtschaftlichen Bewertungskenngröße des jeweiligen technischen Betriebsmittels erforderlichen Eingangsdaten der wirtschaftlich relevanten Eingangskenngroßen können basierend auf Erfahrungswerten und/oder technisch/kaufmännischen Überlegungen abgeschätzt und/oder vergleichbar den technischen Eingangskenngrößen bestimmt werden.

WO 2009 042 581 A1 beschreibt ein Verfahren zum intelligenten Überwachen und Verwalten eines elektrischen Systems, umfassend:

- eine Datenerfassungskomponente, die kommunikativ mit einem Sensor verbunden ist, der dazu konfiguriert ist, Echtzeitdaten des elektrischen Systems zu erfassen;
- einen Leistungsanalytik-Server, der kommunikativ mit der Datenerfassungskomponente verbunden ist, umfassend:

  • eine Engine zum virtuellen Modellieren des System, die dazu konfiguriert ist, für das elektrische System eine Prognosedaten-Ausgabe unter Verwendung eines virtuellen Systemmodells des elektrischen Systems zu erzeugen;
  • eine Analytik-Engine, die dazu konfiguriert ist, die Echtzeitdaten-Ausgabe und die Prognosedaten-Ausgabe des elektrischen Systems zu überwachen, und die außerdem dazu konfiguriert ist, eine Kalibrierungs- und Synchronisierungs-Operation einzuleiten, um das virtuelle Systemmodell zu aktualisieren, wenn eine Differenz zwischen der Echtzeit-Datenausgabe und der Prognosedaten-Ausgabe einen Schwellenwert überschreitet;
  • eine Echtzeitengine für einen Sicherheitsindex des elektrischen Systems, die dazu konfiguriert ist, Echtzeitwerte eines Systemsicherheitsindex auf der Basis von aus dem virtuellen Systemmodell erzeugten Daten von Stabilitätsindizes zu berechnen, und

- ein Client-Terminal, das kommunikativ mit dem Leistungsanalytik-Server verbunden ist und dazu konfiguriert ist, den Systemsicherheitsindex anzuzeigen.

Mit diesem bekannten Verfahren wird eine "Alterung des virtuellen Modells synchron zum realen Netz" sichergestellt. Zusätzlich ist eine lernende Software hinterlegt, die Muster erkennt und auswertet und daraus Abschätzungen auf die Entwicklung von Parametern des elektrischen Systems treffen kann.

Markus Bauer: "Individuelles Online-Monitoring für Transformatoren", 19 Februar 2014, XP055461717" beschreibt ein System zur Überwachung von Betriebsmitteln eines elektrischen Systems zur Energieversorgung, insbesondere von Transformatoren. Mittels einer Hard- und Softwareplattform werden relevante Betriebsdaten von Leistungstransformatoren erfasst und bewertet. Die Bewertung der erfassten Betriebsmitteldaten kann die Dokumentation und Meldung von Grenzwertüberschreitungen, Vorschläge für Diagnosemessungen und Lebenszeit-Verlängerungsmaßnahmen, die Unterstützung des Risikomanagements und der Wartungsstrategie, die Sicherstellung der Verfügbarkeit des Leistungstransformators sowie die Minimierung des Risikos von Anlagenstörungen beinhalten.

Markus Bauer: "Vattenfall setzt im Kraftwerk Boxberg auf das MR-Flottenmonitoring", 18 Mai 2016, XP055461725" (D2) beschreibt die Überwachung mehrerer Leistungstransformatoren eines Kohlekraftwerks mittels eines Flottenmonitorings. Es werden Daten von mehreren Betriebsmitteln anhand einzelner Überwachungseinheiten erfasst, an ein zentrales Flottenmanagement-System übermittelt und durch dieses dargestellt. Gemäß der Lehre der erlaubt es die Darstellung der Informationen dem Betreiber der Betriebsmittel eine verbesserte Betriebsführung zu gewährleisten.

Werden dem virtuellen Modell zusätzliche Eingangsparameter hinzugefügt, dann ist es möglich Ausfallraten, Reparaturhäufigkeit, Ausfallkosten, etc. in der Systemanalyse zu berücksichtigen. Das so generierte um zusätzliche Parameter zur Verfügbarkeit erweiterte virtuelle Modell wird eingesetzt und entsprechende Handlungsempfehlungen zur Netzsteuerung zu generieren.

Der Erfindung liegt die Aufgabe zugrunde ein Verfahren zur Einsatzplanung von Betriebsmitteln eines elektrischen Systems zur Energieversorgung zu schaffen, mit dem die höchstmögliche Verfügbarkeit sowie Stabilität elektrischer Systeme (Stromnetze) gewährleistet werden kann.

Die obige Aufgabe wird von einem Verfahren zur Einsatzplanung von Betriebsmitteln eines elektrischen Systems zur Energieversorgung, gemäß den Merkmalen des unabhängigen Anspruchs 1 erfüllt. Vorteilhafte Ausführungsformen der Erfindung sind in den abhängigen Ansprüchen 2 bis 8 beansprucht.

Eine weitere Aufgabe der Erfindung ist ein elektrisches System zur Energieversorgung zu schaffen, mit dem die höchstmögliche Verfügbarkeit sowie Stabilität der elektrischen Systeme (Stromnetze) gewährleistet werden kann.

Die obige Ausgabe wird von einem elektrischen System zur Energieversorgung gelöst, dass die Merkmale des unabhängigen Anspruchs 9 umfasst. Vorteilhafte Ausführungsformen der Erfindung sind in den abhängigen Ansprüchen 10 bis 11 beansprucht.

Das erfindungsgemäße Verfahren zur Einsatzplanung von Betriebsmitteln, die jeder Netzknoten eines elektrischen Systems zur Energieversorgung umfasst, wobei die Betriebsmittel regelbare Leistungstransformatoren, Leistungsschalter, verschiedene Trennschalter, eine Zuleitung aus einem übergeordneten bzw. versorgenden Netz sind. Die Trennschalter und die Leistungsschalter sind, sowohl eingangsseitig als auch ausgangsseitig, mit den Leistungstransformatoren verbunden, welche Abgänge zur Versorgung nachgelagerter Energieversorgungsnetze umfassen. Jeder Netzknoten besitzt eine lokale Auswerteeinrichtung, die zur Erfassung, Auswertung und Kommunikation von Betriebsmittel- und Umgebungsdaten dient. Die von den lokalen Auswerteeinrichtungen erfassten und verarbeiteten Daten werden über bidirektionale Kommunikationsleitungen sowohl an ein zentrales Datenbanksystem als auch an ein übergeordnetes SCADA-System übermittelt, die beide über bidirektionale Kommunikationsleitungen und jeweils mit einer übergeordneten Auswerteeinrichtung verbunden sind.

Ein zukünftiger Zeitpunkt $(t+\Delta t)$ wird von der übergeordneten Auswerteeinrichtung vorgegeben, der über das übergeordnete SCADA-System an die lokalen Auswerteeinrichtungen gesendet wird.

Für jedes der Betriebsmittel

- werden erste Parameterdaten SP ermittelt, die die technische Beschaffenheit des jeweiligen Betriebsmittels beschreiben;
- werden zweite Parameterdaten KP ermittelt, die die Relevanz des jeweiligen Betriebsmittels im Vergleich zu den übrigen Betriebsmitteln beschreiben;
- werden Kenngrößendaten DP(t) des jeweiligen Betriebsmittels, die den aktuellen technischen Zustand des jeweiligen Betriebsmittels beschreiben, kontinuierlich durch die lokale Auswerteeinrichtung erfasst;
- in der lokalen Auswerteeinrichtung oder der übergeordneten Auswerteeinrichtung wird mit Hilfe einer ersten Formel

$$HI(t + \Delta t)_{average,i} = \sum_{m=1} WHI_m * CHI(t + \Delta t)_{Average,m}[\%]$$

aus einem prognostizierte Gesamtzustand $CHI_m$ für jede Risikogruppe m und für den zukünftigen Zeitpunkt $(t+\Delta t)$, der sich aus den ersten Parameterdaten SP und seinen Kenngrößendaten DP(t) ermittelt, in Verbindung mit einem Gewichtungsfaktor $WHI_m$ für das jeweils betrachtete Betriebsmittel ein prognostizierter Health-Index $HI_i$ ermittelt, der den prognostizierten Zustand dieses Betriebsmittels für den zukünftigen Zeitpunkt $(t+\Delta t)$ darstellt;

- in der lokalen Auswerteeinrichtung oder der übergeordneten Auswerteeinrichtung wird mit Hilfe einer zweiten Formel

$$CI_{Average,i} = \sum_{n=1} WKP_n * KP_n$$

aus den zweiten Parameterdaten KP in Verbindung mit einem Gewichtungsfaktor $WKP_n$ für einzelne zweite Parameterdaten ein Kritizitätsindex $CI_i$ ermittelt;

- in der lokalen Auswerteeinrichtung oder der übergeordneten Auswerteeinrichtung wird mit Hilfe einer dritten Formel

$$RI_i(t + \Delta t) = HI_{average,i}(t + \Delta t) * CI_{Average,i}$$

aus dem prognostizierten Health-Index $HI_i$ und dem Kritizitätsindex $CI_i$ ein erweiterter Zustandsindex $RI_i$ ermittelt, der eine prognostizierte Risikoanalyse der Betriebsmittel darstellt.

Für das elektrische System

- wird anhand des erweiterten Zustandsindex $RI_i$ in der übergeordneten Auswerteeinrichtung eine prognostizierende Bewertung der Stabilität und/oder Verfügbarkeit für den zukünftigen Zeitpunkt $(t+\Delta t)$ durchgeführt;

- wird die Bewertung der Stabilität und/oder Verfügbarkeit durch die übergeordnete Auswerteeinrichtung, gemäß einem (N-x)-Kriterium, das erfüllt ist, wenn bei Ausfall von x Betriebsmitteln die uneingeschränkte Funktionsfähigkeit des elektrischen Systems bestehen bleibt, durchgeführt;

- wird die Erfüllung des (N-x)-Kriteriums in Abhängigkeit der Zeit t geprüft, indem eine Funktion f(t+Δt) in der übergeordneten Auswerteeinrichtung zur Prognose des erwarteten Netzzustandes genutzt wird; und

- werden in der übergeordneten Auswerteeinrichtung Handlungsempfehlungen generiert, die einen Eingriff in die Netztopologie und/oder das Zuschalten mindestens eines Betriebsmittels und/oder das Abschalten mindestens eines Betriebsmittels und/oder eine optimierte Auslastung der Betriebsmittel und/oder ein optimiertes Wartungskonzept und/oder ein optimiertes Reparaturkonzept und/oder einen Betrieb der Betriebsmittel zur verbesserten Stabilität und/oder Verfügbarkeit umfassen.

Das erfindungsgemäße System zur Energieversorgung umfasst mehrere Netzknoten, wobei jeder Netzknoten mehrere Betriebsmittel, wie beispielsweise Transformatoren, Leistungsschalter, verschiedene Trennschalter, Stromleitungen, aufweist. Eine lokale Auswerteeinrichtung ist für jeden Netzknoten zur Erfassung, Auswertung und Kommunikation von Betriebsmittel- und Umgebungsdaten vorgesehen. Eine Steuerungsanlage besitzt die lokale Auswerteeinrichtung der Netzknoten, ein übergeordnetes SCADA-System, eine übergeordnete Auswerteeinrichtung, ein zentrales Datenbanksystem und bidirektionale Kommunikationsleitungen. Die lokalen Auswerteeinrichtungen sind über die bidirektionalen Kommunikationsleitungen mit dem übergeordneten SCADA-System und dem zentralen Datenbanksystem verbunden. Die übergeordnete Auswerteeinrichtung ist über bidirektionale Kommunikationsleitungen mit dem übergeordneten SCADA-System und dem zentralen Datenbanksystem verbunden, wobei die Steuerungsanlage derart ausgebildet ist, dass eine Einsatzplanung der Betriebsmittel ausführbar ist.

Das elektrische System gibt einen zukünftigen Zeitpunkt $(t+\Delta t)$ vor.

Das elektrische System ermittelt:

- erste Parameterdaten SP, die die technische Beschaffenheit des jeweiligen Betriebsmittelt beschreiben;

- zweite Parameterdaten KP, die die Relevanz des jeweiligen Betriebsmittels (101... 106) im Vergleich zu den übrigen Betriebsmitteln beschreiben.

Durch die lokalen Auswerteeinrichtungen des elektrischen Systems sind Kenngrößendaten DP(t) des jeweiligen Betriebsmittels erfassbar.

In der lokalen Auswerteeinrichtung oder der übergeordneten Auswerteeinrichtung ist mit Hilfe einer ersten Formel

$$HI(t + \Delta t)_{average,i} = \sum_{m=1} WHI_m * CHI(t + \Delta t)_{Average,m}[\%]$$

aus einem prognostizierte Gesamtzustand $CHI_m$ für jede Risikogruppe m und für den zukünftigen Zeitpunkt (t+$\Delta$t), der sich aus den ersten Parameterdaten SP und den Kenngrößendaten DP(t) ermittelt, in Verbindung mit einem Gewichtungsfaktor $WHI_m$ für das jeweils betrachtete Betriebsmittel ein prognostizierter Health-Index $HI_i$ ermittelbar, der den prognostizierten Zustand dieses Betriebsmittels (101... 106) für den zukünftigen Zeitpunkt (t+$\Delta$t) darstellt.

In der lokalen Auswerteeinrichtung oder der übergeordneten Auswerteeinrichtung ist mit Hilfe einer zweiten Formel

$$CI_{Average,i} = \sum_{n=1} WKP_n * KP_n$$

aus den zweiten Parameterdaten KP in Verbindung mit einem Gewichtungsfaktor $WKP_n$ für einzelne zweite Parameterdaten ein Kritizitätsindex $CI_i$ ermittelbar.

In der lokalen Auswerteeinrichtung oder der übergeordneten Auswerteeinrichtung ist mit Hilfe einer dritten Formel

$$RI_i(t + \Delta t) = HI_{average,i}(t + \Delta t) * CI_{Average,i}$$

aus dem prognostizierten Health-Index $HI_i$ und dem Kritizitätsindex $CI_i$ ein erweiterter Zustandsindex $RI_i$ ermittelbar, der eine prognostizierte Risikoanalyse der Betriebsmittel darstellt.

Für das elektrische System anhand des erweiterten Zustandsindex $RI_i$ in der übergeordneten Auswerteeinrichtung eine prognostizierende Bewertung der Stabilität und/oder Verfügbarkeit für den zukünftigen Zeitpunkt durchführbar ist,

Für das elektrische System die Bewertung der Stabilität und/oder Verfügbarkeit gemäß einem (N-x)-Kriterium, das erfüllt ist, wenn bei Ausfall von x Betriebsmitteln die uneingeschränkte Funktionsfähigkeit des elektrischen Systems bestehen bleibt, erfolgt.

Für das elektrische System die Erfüllung des (N-x)-Kriteriums in Abhängigkeit der Zeit t prüfbar ist, indem eine Funktion f(t+$\Delta$t) in der übergeordneten Auswerteeinrichtung zur Prognose des erwarteten Netzzustandes nutzbar ist.

Für das elektrische System die übergeordnete Auswerteeinrichtung derart gestaltet ist, dass Handlungsempfehlungen generierbar sind, die einen Eingriff in die Netztopologie und/oder das Zuschalten mindestens eines Betriebsmittels und/oder das Abschalten mindestens eines Betriebsmittels und/oder eine optimierte Auslastung der Betriebsmittel und/oder ein optimiertes Wartungskonzept und/oder ein optimiertes Reparaturkonzept und/oder einen Betrieb der Betriebsmittel zur verbesserten Stabilität und/oder Verfügbarkeit umfassen.

Die erfindungsgemäße Betriebsführung sowie Einsatzplanung von Betriebsmitteln eines elektrischen Systems nimmt aktuelle und zeitbasierte Prognosedaten der entsprechenden Betriebsmittel in die Planungs- und Berechnungsmodelle zu Betriebsführung sowie Einsatzplanung auf. Somit wird eine dynamisierte Netzberechnung basierend auf mathematischen Modellen, wie z.B. Alterungsmodellen, möglich.

Wie gezeigt existieren auf der Ebene der jeweiligen Betriebsmittelpopulation, wie beispielsweise der Transformatoren-Population, der Freileitungs-Population oder der Schaltanlagen-Population, bereits Ansätze um den Zustand sowie die Ausfallwahrscheinlichkeit eines Betriebsmittels oder einer Vielzahl oder Gruppe von Betriebsmitteln zu analysieren und Handlungsempfehlungen abzuleiten. Die eingesetzten Berechnungsmethoden bzw. Verfahren zur Verfügbarkeitsberechnung und Sicherstellung des (N-1)-Kriteriums hingegen, nutzen bisher keine zeitabhängige Aussage zur Verfügbarkeit eines Betriebsmittels im Energieversorgungssystem. Eine zeitabhängige Betrachtung, etwa, eine Prognoserechnung wie lange ein Betriebsmittel basierend auf seiner bisherigen Nutzung noch zur Verfügung stehen wird und die daraus resultierenden Auswirkungen auf die Stabilität eines Systems, wird derzeit im Rahmen von Netz- und Verfügbarkeitsberechnung nicht angewandt.

Die Betriebsmittel umfassen beispielsweise wenigstens einen Transformator und/oder wenigstens eine elektrische Leitung (ausgeführt als Freileitung oder Erdkabel) und/oder wenigstens eine Schaltanlage und/oder wenigstens ein Filter und/oder wenigstens eine Blindleistungskompensationsanlage und/oder wenigstens eine Anlage zur unterbrechungsfreien Stromversorgung und/oder weitere Elemente der elektrischen Energieversorgung.

Das elektrische System ist beispielhaft ein Energieversorgungsnetz, das elektrische Leitungen, wie Freileitungen oder Erdkabel, und die dazugehörigen Einrichtungen wie Schaltwerke, Netzknoten - auch als Umspannwerke oder Substationen bezeichnet - sowie die daran angeschlossenen Kraftwerke und Verbraucher umfasst.

Die Parameterdaten sind Werte, die im Zeitablauf nahezu konstant sind und daher näherungsweise als statische Werte betrachtet werden können. Es genügt somit eine einmalige oder lediglich in großen zeitlichen Abständen wiederholte Erfassung. Parameterdaten können beispielsweise Nennleistung oder Nennspannung eines Betriebsmittels oder Kosten für einen Betriebsmitteltausch sein. Parameterdaten, die sich im Zeitablauf gar nicht ändern, umfassen z.B. Leerlauf- und Kurzschlussspannung des Transformators, Nennleistung sowie maximalen Kurzschlussstrom. Parameterdaten, die sich im zeitverlauf nur sehr langsam ändern, umfassen bspw. solche, die während einer jährlichen Routinewartung erfasst werden, z.B. Daten aus seiner Offline-Öl-Analyse (offline DGA), die Aufschluss über die Ölqualität des Transformators geben.

Die Kenngrößen hingegen sind Werte, die zeitlichen Schwankungen unterliegen und daher als dynamische Werte betrachtet werden können. Sie bedürfen daher einer kontinuierlichen oder wiederholten Erfassung. Kenngrößen können beispielsweise Temperaturen, elektrische Leistungen, elektrische Ströme oder elektrische Spannungen sein.

Der zukünftige Zeitpunkt kann ein fixer Zeitpunkt in der Zukunft sein oder anhand einer vorgegebenen Zeitspanne, die auf einen Ausgangspunkt referenziert, definiert werden. Aus der prognostizierenden Bewertung wird eine angepasste Einsatzplanung der Betriebsmittel erzeugt. Auf Basis der Einsatzplanung werden Handlungsempfehlungen zur Betriebsführung des elektrischen Systems erzeugt.

Zur Erstellung der ersten mathematischen Regel werden physikalische Risikogruppen gebildet, die Mechanik und/oder Thermik und/oder Dielektrik und/oder Stufenschalter und/oder Durchführung und/oder Kühlung und/oder weitere Gruppen umfassen.

Für die Bildung der einzelnen Risikogruppen werden spezifische mathematische Modelle zur Zustandsanalyse und Charakterisierung genutzt.

Die erste mathematische Regel umfasst ein thermisches Alterungsmodell eines Transformators oder einer Freileitung und/oder Regeln zur Modellierung der mechanischen Belastung in einem Transformator und/oder Regeln zur DGA-Analyse.

Die Kenngrößen eines Transformators umfassen den Laststrom, die Temperatur des Transformatorisolieröls und/oder die Umgebungstemperatur und/oder die Gaskonzentration im Isolieröl des Transformators und/oder die Momentanleistung des Transformators. Die Abtastraten zwischen zwei Messzeitpunkten für die Ermittlung von Parameterdaten sind um mehrere Größenordnungen größer als die Abtastraten zwischen zwei Messzeitpunkten für die Ermittlung von Kenngrößendaten.

Die ersten Parameterdaten eines Betriebsmittels umfassen die Leerlaufspannung des Betriebsmittels und/oder die Kurzschlussspannung des Betriebsmittels und/oder durch visuelle Inspektion ermittelte Daten des Betriebsmittels.

Die Kenngrößendaten können vor Ort am jeweiligen Betriebsmittel erfasst werden.

Die zweiten Parameterdaten eines Betriebsmittels die Spannungsebene des Betriebsmittels und/oder die Kosten für einen Betriebsmitteltausch und/oder die Reaktionszeiten von Servicepersonal und/oder die Topologie der Abschnitte des Systems, die an das Betriebsmittel angeschlossen sind, und/oder die Versorgungssicherheit der Abschnitte des Systems, die an das Betriebsmittel angeschlossen sind, und/oder die Wichtigkeit des Betriebsmittels für einen Endkunden und/oder die Redundanz der Abschnitte des Systems, die an das Betriebsmittel angeschlossen sind, und/oder die wirtschaftlichen und/oder ökologischen Folgen eines Ausfalls des Betriebsmittels umfassen.

Die zweiten Parameterdaten werden in einem zentralen Datenbanksystem oder einer Netzknotendatenbank gespeichert.

Die Ermittlung des erweiterten Zustandsindex erfolgt lokal, insbesondere durch eine lokale Auswerteeirichtung, oder zentral, insbesondere durch eine übergeordnete Auswerteeinrichtung.

Die Bewertung der Stabilität und/oder Verfügbarkeit erfolgt gemäß dem (N-x)-Kriterium.

Dabei ist N die Anzahl der Betriebsmittel im elektrischen System und x die Anzahl derjenigen Betriebsmittel, bei denen ein Ausfall der Betriebs- oder Funktionstüchtigkeit auftritt. Das (N-x)-Kriterium ist erfüllt, wenn bei Ausfall von x Betriebsmitteln die uneingeschränkte Funktionsfähigkeit des elektrischen Systems bestehen bleibt.

Die Erfüllung des (N-x)-Kriteriums wird in Abhängigkeit der Zeit t geprüft, indem eine Funktion $f(t+\Delta t)$ zur Prognose des erwarteten Netzzustandes genutzt wird.

Wenigstens eines der Betriebsmittel und oder einer der Netzknoten weist eine DatenSchnittstelle zu einem SCADA-System (Supervisory Control und Data Acquisition) auf.

Die Handlungsempfehlungen umfassen den Eingriff in die Netztopologie und/oder das Zuschalten mindestens eines Betriebsmittels und/oder das Abschalten mindestens eines Betriebsmittels und/oder eine optimierte Auslastung der Betriebsmittel und/oder ein optimiertes Wartungskonzept und/oder ein optimiertes Reparaturkonzept und/oder einen Betrieb der Betriebsmittel zur verbesserten Stabilität und/oder Verfügbarkeit.

Die Steuerungsanlage ist derart ausgebildet, dass sie eines der vorgeschlagenen Verfahren ausführen kann.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in

FIG. 1     einen Netzknoten eines Energieversorgungsnetzes;

FIG. 2     ein Energieversorgungsnetz mit Netzknoten gemäß FIG. 1;

FIG. 3     Verfahrensschritte zur optimierten Einsatzplanung des Energieversorgungsnetzes;

FIG. 4     Verfahrensschritte zur Ermittlung eines erweiterten Zustandsindex für Betriebsmittel des Energieversorgungsnetzes.

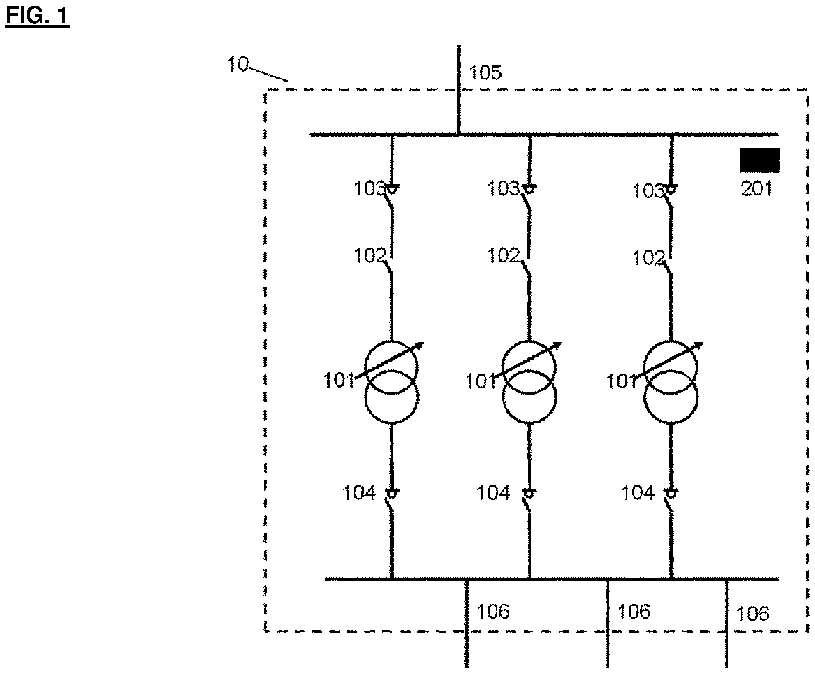

In FIG. 1 ist eine bevorzugte Ausführungsform eines Netzknotens 10 eines Energieversorgungsnetzes, das beispielhaft für ein elektrisches System zur Energieversorgung steht, schematisch dargestellt. Der Netzknoten 10 umfasst eine Zuleitung 105 aus einem übergeordneten bzw. versorgenden Netz, verschiedene Trennschalter 103, 104 und Leistungsschalter 102 sowie drei regelbare Leistungstransformatoren 101, die sowohl eingangsseitig als auch ausgangsseitig mit den Trennschaltern 103, 104 und den Leistungsschaltern 102 verbunden sind. Weiterhin sind beispielhaft drei Abgänge 106 zur Versorgung nachgelagerter Energieversorgungsnetze abgebildet.

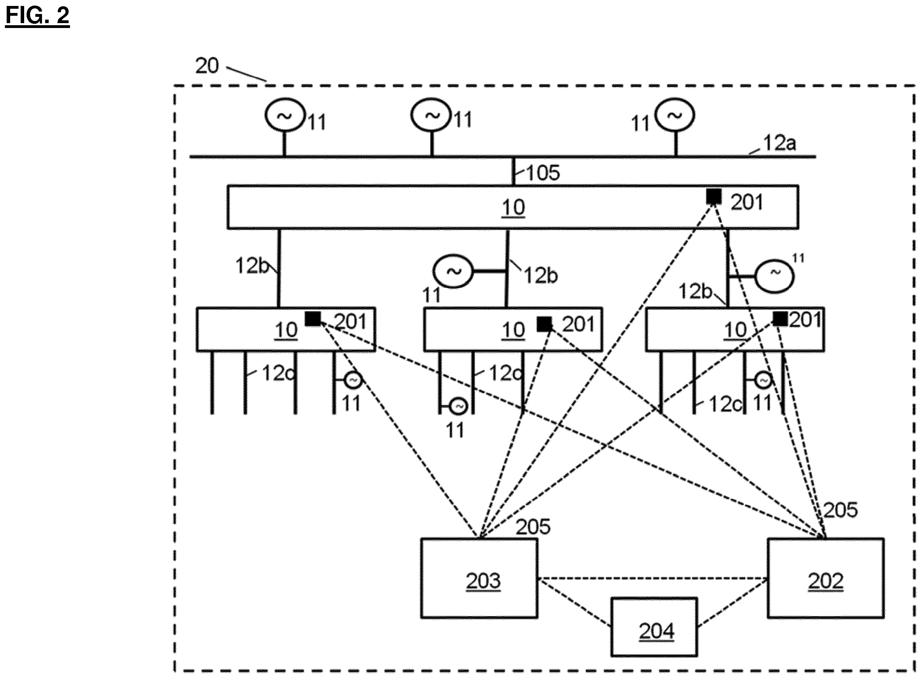

In FIG. 2 ist eine bevorzugte Ausführungsform des Systems 20 zur Energieversorgung oder des Energieversorgungsnetzes 20 schematisch dargestellt. Energieversorgungsnetze sind im Allgemeinen hierarchisch aufgebaut, da Übertragung und Verteilung der Energie auf unterschiedlichen Spannungsebenen erfolgt. Eingesetzte Betriebsmittel zur Versorgung der Verbraucher (nicht dargestellt) sind u.a. elektrische Stromleitungen 12a, 12b, 12c der jeweiligen Netzebene, ausgebildet als Freileitung oder Erdkabel, Erzeugungseinheiten oder Erzeuger 11, wie z.B. Kraftwerke oder Anlagen zur Erzeugung von Energie aus regenerativen Quellen, sowie die in den Netzknoten 10 vorhandenen Transformatoren 101, Leistungsschalter 102 und Trennschalter 103, 104.

Jeder Netzknoten 10 verfügt über eine lokale Auswerteeinrichtung 201 zur Erfassung, Auswertung und Kommunikation von Betriebsmittel- und Umgebungsdaten. Die durch die einzelnen lokalen Auswerteeinrichtungen 201 erfassten und verarbeiteten Daten werden über bidirektionale Kommunikationsleitungen 205 sowohl an ein zentrales Datenbanksystem 203 als auch an ein übergeordnetes SCADA (Supervisory Control and Data Acquisition)-System 202 übermittelt. Über eine weitere bidirektionale Kommunikationsleitung ist eine Kommunikation zwischen dem SCADA-System 202 und dem zentralen Datenbanksystem 203 möglich. Weiterhin umfasst das Energieversorgungsnetz 20 eine übergeordnete Auswerteeinrichtung 204, die Handlungsempfehlungen zur optimierten Netzbetriebsführung aus Daten des zentralen Datenbanksystems 203 sowie aktuellen Betriebsdaten, die durch das SCADA-System 202 zur Verfügung gestellt werden, generiert. Die lokalen Auswerteeinrichtungen 201, das SCADA-System 202, das zentrale Datenbanksystem 203, die übergeordnete Auswerteeinrichtung 204 und die Kommunikationsleitungen 205 bilden zusammen eine Steuerungsanlage 200 des Energieversorgungsnetzes 20.

Die übergeordnete Auswerteeinrichtung 204 ist derart ausgebildet, dass sie eine bevorzugte Ausführungsform eines Verfahrens zur Einsatzplanung von Betriebsmitteln des Energieversorgungsnetzes 20 ausführen kann. Das Verfahren basiert auf der Ermittlung von erweiterten Zustandsindizes, für die einzelnen Betriebsmittel, sowie auf der Zusammenführung und der Auswertung der erweiterten Zustandsindizes. Auf Basis dieser Auswertung wird eine Handlungsempfehlung zu optimierten Betriebsführung des Energieversorgungsnetzes 20 abgegeben.

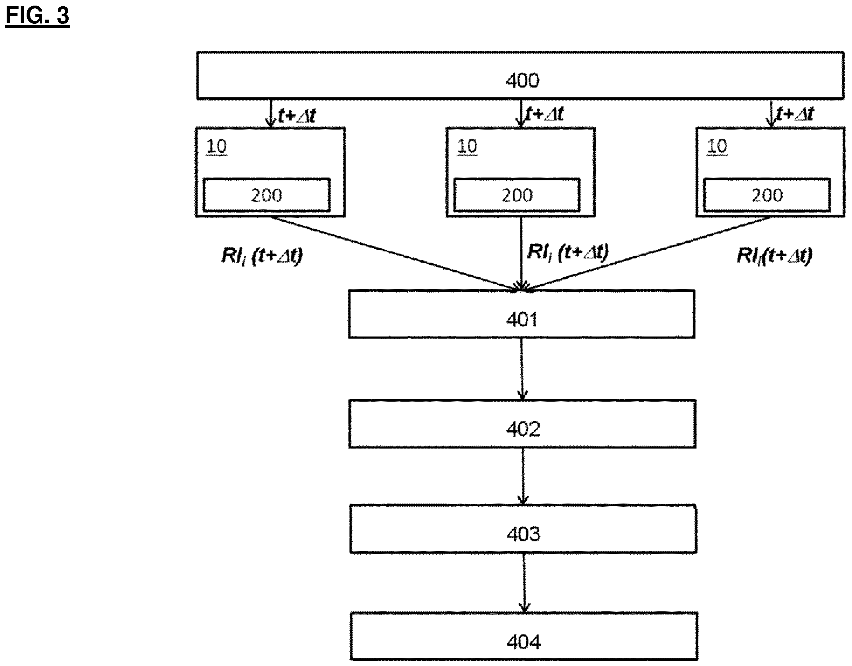

In FIG. 3 ist die bevorzugte Ausführungsform des Verfahrens schematisch dargestellt, die von der Steuerungsanlage 200 ausgeführt wird.

In einem Schritt 400 wird ein zukünftiger Zeitpunkt t+Δt vorgegeben. Dies erfolgt beispielhaft durch die übergeordnete Auswerteeinrichtung 204, die den zukünftigen Zeitpunkt t+Δt über das SCADA-System 202 an die lokalen Auswerteeinrichtungen 201 sendet.

Dann werden beispielhaft für die drei Netzknoten 10 der FIG. 2 in einem Schritt 200 erweiterte Zustandsindizes $RI_i$ (i = 1 2,3) für die Betriebsmittel 101, 102, 103, 104 des jeweiligen Netzknotens 10 ermittelt. Die Ermittlung der erweiterten Zustandsindizes $RI_i$ kann entweder direkt am jeweiligen Betriebsmittel 101... 104 durch die lokalen Auswerteeinrichtungen 201 oder zentral durch die übergeordnete Auswerteeinrichtung 204 erfolgen.

Für den Fall, dass die erweiterten Zustandsindizes $RI_i$ durch die übergeordnete Auswerteeinrichtung 204 ermittelt werden (in FIG. 3 nicht dargestellt), werden durch die lokalen Auswerteeinrichtungen 201 Rohdaten oder aufbereitete Datenreihen mittels der Kommunikationsverbindungen 205 an die übergeordnete Auswerteeinrichtung 204 zur Verfügung gestellt.

Für den Fall, dass die Ermittlung der erweiterten Zustandsindizes $RI_i$ durch die lokalen Auswerteeinrichtungen 201 erfolgt, werden die ermittelten erweiterten Zustandsindizes $RI_i$ in einem Schritt 401 mittels der Kommunikationsverbindungen 205 an die übergeordnete Auswerteeinrichtung 204 übermittelt.

In einem Schritt 402 wird durch die übergeordnete Auswerteeinrichtung 204 anhand eines Berechnungsprogramms zur Modellierung, Analyse und Simulation von Energieversorgungssystemen eine prognostizierende Bewertung von Stabilität und Verfügbarkeit des Energieversorgungsnetzes 20 für den vorgegebenen zukünftigen Zeitpunkt t+Δt durchgeführt. Hierzu wird anhand der übermittelten erweiterten Zustandsindizes $RI_i$ eine Prognose des erwarteten Zustands des Energieversorgungsnetzes 20 für den zukünftigen Zeitpunkt t+Δt mithilfe bekannter Verfahren zur Lastflussberechnung und Stabilitätsanalyse durchgeführt. Zusätzlich können in die Prognose auch Informationen zu aktuellen Betriebsdaten oder sonstige Informationen aus dem SCADA-System 202 einfließen. Ein Verfahren zur Lastflussberechnung und Stabilitätsanalyse ist beispielsweise beschrieben in der Druckschrift FENG H. ET AL "Intelligent Control of On-Load Tap-Changer Based on Voltage Stability Margin Estimation Using Local Measurements", die im Rahmen der CIGRE SES-SION 2016 veröffentlicht worden ist.

In einem Schritt 403 erfolgt anhand der Prognose eine prognostizierte Bewertung von Stabilität bzw. Verfügbarkeit des Energieversorgungsnetzes 20 für den zukünftigen Zeitpunkt t+Δt anhand des (N-x)-Kriteriums, wobei N die Anzahl der Betriebsmittel 101... 104 im Energieversorgungsnetz 20 ist und x die Anzahl derjenigen Betriebsmittel 101... 104 beschreibt, bei denen ein Ausfall der Betriebs- oder Funktionstüchtigkeit auftritt. Das (N-x)-Kriterium ist erfüllt, wenn bei Ausfall von x Betriebsmitteln die uneingeschränkte Funktionsfähigkeit des Energieversorgungsnetzes 20 bestehen bleibt. Definition und Anwendung des (N-x)-Kriteriums sind beispielsweise beschrieben in der Dissertation von KAP-TUE KAMGA A. "Regelzonenübergreifendes Netzengpassmanagement mit optimalen Topologiemaßnahmen", Wuppertal 2009, Kapitel 2.4.

In einem Schritt 404 werden durch die übergeordnete Auswerteeinrichtung 204 auf Basis der prognostizierten Bewertung Handlungsempfehlungen zum Netzbetrieb generiert.

Diese Handlungsempfehlungen können bspw. Eingriffe in die Netztopologie und/oder Zuschalten mindestens eines Betriebsmittels 101 ... 104, 105, 106 und/oder Abschalten mindestens eines Betriebsmittels 101... 106 und/oder eine optimierte Auslastung der Betriebsmittel 101... 106 und/oder ein optimiertes Wartungskonzept und/oder ein optimiertes Reparaturkonzept und/oder ein Betrieb der Betriebsmittel 101... 106 zur verbesserten Stabilität und/oder ein Betrieb der Betriebsmittel 101... 106 zur verbesserten Verfügbarkeit umfassen. Vorteilhaft werden die generierten Handlungsempfehlungen dem Bediener mittels einer Mensch-Maschine-Schnittstelle, z.B. in Form einer Visualisierungs- und Benutzeroberfläche, zur Verfügung gestellt. Weiterhin denkbar ist, dass die übergeordnete Auswerteeinrichtung 204 mit einem E-Mail-Client oder einem E-Mail-Programm zusammenwirkt und die generierten Handlungsempfehlungen automatisiert an einen vorbestimmten Empfängerkreis versandt werden.

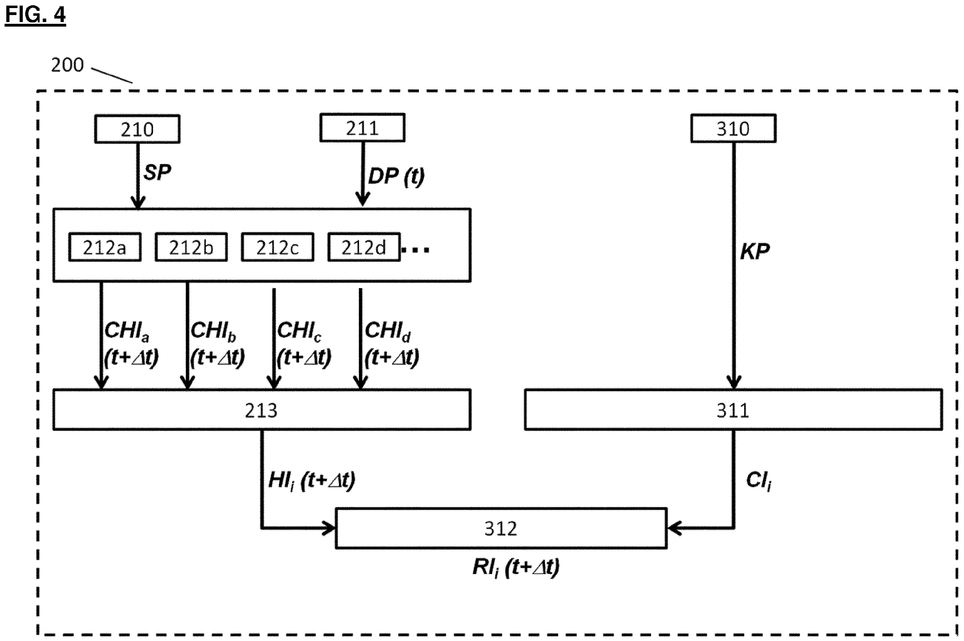

In FIG. 4 ist eine bevorzugte Ausführungsform des Schrittes 200 beispielhaft für das Betriebsmittel Transformator 101 schematisch dargestellt. Analog hierzu kann die Erstellung eines erweiterten Zustandsindex für weitere Betriebsmittel, wie z.B. Freileitungen oder Erdkabel oder Schalteinrichtungen, erfolgen.

Zunächst wird der Transformator 101 in relevante physikalische Risikogruppen (z.B. Mechanik, Thermik, Dielektrik, Stufenschalter, Durchführungen, Kühlung sowie Kessel und Zubehör) unterteilt. In einem Schritt 210 werden erste Parameterdaten SP, die die technische Beschaffenheit der Betriebsmittel beschreiben, ermittelt. Die Ermittlung der ersten Parameterdaten SP kann automatisiert durch die jeweilige lokale Auswerteeinrichtung 201 und/oder manuell durch einen Anwender und/oder anhand frei gestaltbarer numerischer und/oder logischer Verknüpfungsvorschriften und/oder durch Verarbeitung unscharfer Eingangskenngrößen unter Anwendung von Fuzzy-Logik-Regeln und/oder mittels probabilistischer Methoden erfolgen. Erste Parameterdaten SP können also beispielsweise sowohl direkt erfasste Kenndaten eines Betriebsmittels (z.B. Nennleistung eines Transformators 101) als auch anhand von Messwerten ermittelte Größen (z.B. Auswertungen aus offline DGA-Analysen) umfassen.

In einem Schritt 211 werden Kenngrößendaten DP(t), die den aktuellen technischen Zustand des Betriebsmittels 101 beschreiben, kontinuierlich erfasst. Diese Kenngrößendaten DP(t) umfassen beispielsweise den Laststrom, die Temperatur des Transformatorisolieröls (Hot-Spot-Temperatur), die Umgebungstemperatur, die Momentanleistung des Transformators 101 bezogen auf seine Nennleistung, Ölfüllstände, mechanisch wirkende Kräfte, oder sonstige über Sensoren oder Monitoring-Einrichtungen zur Verfügung gestellte Daten. Die Erfassung der Kenngrößendaten DP(t) erfolgt vorteilhaft automatisiert durch die lokale Auswerteeinrichtung 201 anhand frei gestaltbarer numerischer und/logischer Verknüpfungsvorschriften. Auch eine Verarbeitung unscharfer Eingangskenngrößen unter Anwendung von Fuzzy-Logik-Regeln bzw. -Methoden und/oder probabilistischen Methoden ist vorteilhaft möglich. Kenngrößendaten DP(t) können also sowohl direkt erfasste Messwerte (z.B. Umgebungstemperatur) als auch anhand von Messwerten errechnete Größen (z.B. Hot-Spot Temperatur) umfassen.

Eine Ermittlung der ersten Parameterdaten SP sowie der Kenngrößendaten DP(t) ist beispielsweise beschrieben in der Druckschrift CIGRE WORKING GROUP A2.18 "Life Management Techniques for Power Transformer", CIGRE, Juni 2003, Kapitel 6, und der Druckschrift CIGRE WORKING GROUP A2.44 "Guide on Transformer Intelligent Condition Monitoring (TCIM) Systems", CIGRE, September 2015, Kapitel 4.

Die Schritte 210 und 211 werden bevorzugt parallel ausgeführt.

Charakteristisch für Parameterdaten und Kenngrößendaten des Betriebsmittels ist weiterhin, dass die Abtastraten zwischen zwei Messzeitpunkten für die Ermittlung von Parameterdaten um mehrere Größenordnungen größer sind als die Abtastraten zwischen zwei Messzeitpunkten für die Ermittlung von Kenngrößendaten.

Für jede physikalische Risikogruppe wird in einem entsprechenden Schritt 212a, 212b, 212c, 212d,... aus den ersten Parameterdaten SP und den Kenngrößendaten DP(t) sowie dem zukünftigen Zeitpunkt t+Δt ein entsprechender prognostizierter Gesamtzustand $CHI_a$, $CHI_b$, $CHI_c$, $CHI_d$,... ermittelt.

Hierzu wird für jede Risikogruppe basierend auf wenigstens einer entsprechenden mathematischen Regel wenigstens ein prognostizierter Zustandswert in Abhängigkeit der Zeit ermittelt. Diese mathematischen Regeln umfassen z.B. Alterungsmodelle der Papierisolation des Transformators, Temperaturmodelle zu Erwärmung und Temperaturverlauf im Transformator, Regeln zur Modellierung der mechanischen Belastung im Transformator, Regeln zur DGA-Analyse, sowie sonstige Prognosemodelle für die jeweiligen Risikogruppen der Betriebsmittel. Entsprechende Prognosemodelle sind beispielsweise beschrieben in der Druckschrift CIGRE WORKING GROUP A2.18 "Life Management Techniques for Power Transformer", CIGRE, Juni 2003, Kapitel 6.

Jeder prognostizierte Zustandswert CP wird gemäß folgender Formel berechnet:

$$CP(t+\Delta t)_{n,m} = f_{n,m}(DP(t), SP)$$

In dieser Formel ist m der Index für die jeweils betrachtete physikalische Risikogruppe, n der Index für den jeweiligen prognostizierten Zustandswert der Risikogruppe m.

Für jede Risikogruppe m wird der entsprechende prognostizierte Gesamtzustand $CHI_m$ gemäß nachfolgender Formel berechnet:

$$CHI(t + \Delta t)_{Average,m} = \frac{\sum_{n=1}(WCP_{n,m} * CP(t + \Delta t)_{n,m})}{\sum_{n=1}(WCP_{n,m} * CP_{\max})} * 100\%$$

In dieser Formel ist $WCP_{n,m}$ ein Gewichtungsfaktor mit $0 \leq WCP_{n,m} \leq 1$.

Die Schritte 212a, 212b, 212c, 212d werden bevorzugt parallel ausgeführt.

In einem Schritt 213 wird aus den prognostizierten Gesamtzuständen $CHI_m$ der physikalischen Risikogruppen m ein prognostizierter Health-Index $HI_i$ des Betriebsmittels gemäß folgender Formel berechnet:

$$HI(t + \Delta t)_{average,i} = \sum_{m=1} WHI_m * CHI(t + \Delta t)_{Average,m}[\%]$$

In dieser Formel ist i der Index für das jeweils betrachtete Betriebsmittel und $WHI_m$ ein Gewichtungsfaktor mit $0 \leq WHI_m \leq 1$.

Die Gewichtungsfaktoren $WHI_m$ können dabei auf empirischen Daten und/oder Erfahrungswerten und/oder technischen Überlegen basieren und können beispielsweise seitens des fachkundigen Bewerters bzw. Anwenders oder Geräteinhabers oder Geräteherstellers festgelegt werden.

In einem Schritt 310 werden zweite Parameterdaten KP, die die Relevanz des jeweiligen Betriebsmittels im Vergleich zu den übrigen Betriebsmitteln beschreiben, ermittelt. Zweite Parameter KP sind z.B. Anschaffungskosten des Betriebsmittels, die Leistung des Betriebsmittels, geographische Lage und Zugänglichkeit, Hersteller, Kosten für einen Betriebsmitteltausch, Netztopologie, Versorgungssicherheit, Wichtigkeit des versorgten Kunden, Wirtschaftliche Folgen eines Netzausfalls, Einfluss eines Netzausfalls auf die Umwelt, empirische ermittelte Ausfallwahrscheinlichkeiten usw. Die Ermittlung der zweiten Parameterdaten KP kann automatisiert durch die lokale Auswerteeinrichtung 201 und/oder manuell durch einen Anwender und/oder anhand frei gestaltbarer numerischer und/oder logischer Verknüpfungsvorschriften und/oder durch Verarbeitung unscharfer Eingangskenngrößen und/oder durch Anwendung von Fuzzy-Logik-Regeln und/oder probalistischen Methoden erfolgen.

In einem Schritt 311 wird aus den zweiten Parameterdaten KP ein Kritizitätsindex $CI_i$ für das jeweilige Betriebsmittel i gemäß folgender Formel berechnet:

$$CI_{Average,i} = \sum_{n=1} WKP_n * KP_n$$

In dieser Formel ist n der Index für einzelne zweite Parameterdaten und $WKP_n$ ein Gewichtungsfaktor mit $0 \leq WKP_n \leq 1$.

Die Gewichtungsfaktoren $WKP_n$ können dabei auf empirischen Daten und/oder Erfahrungswerten und/oder technischen Überlegen basieren und können beispielsweise seitens des fachkundigen Bewerters bzw. Anwenders oder Geräteinhabers oder Geräteherstellers festgelegt werden.

In einem Schritt 312 werden der prognostizierte Health-Index $HI_i$ und der Kritizitätsindex $CI_i$ des jeweiligen Betriebsmittels i in einen erweiterten Zustandsindex $RI_i$ gemäß folgender Formel überführt:

$$RI_i(t + \Delta t) = HI_{average,i}(t + \Delta t) * CI_{Average,i}$$

Die oben genannten Schritte 210 bis 312 werden für alle Betriebsmittel des Energieversorgungsnetzes 20 wiederholt, bis für jedes Betriebsmittel ein erweiterter Zustandsindex vorliegt.

**BEZUGSZEICHEN**

| | |
|---|---|
| 10 | Netzknoten |
| 101 | regelbarer Transformator, Betriebsmittel |
| 102 | Leistungsschalter, Betriebsmittel |
| 103 | erster Trennschalter, Betriebsmittel |
| 104 | zweiter Trennschalter, Betriebsmittel |
| 105 | Zuleitung, Betriebsmittel |
| 106 | Ableitung, Betriebsmittel |
| 11 | Erzeuger, Betriebsmittel |
| 12a, 12b, 12c | Stromleitung, Betriebsmittel |
| 20 | elektrisches System, Energieversorgungsnetz |
| 200 | Steuerungsanlage |
| 201 | lokale Auswerteeinrichtung |
| 202 | SCADA-System |
| 203 | zentrales Datenbanksystem |
| 204 | übergeordnete Auswerteeinrichtung |
| 205 | bidirektionale Kommunikationsleitungen |
| CHI | prognostizierter Gesamtzustand einer physikalischen Risikogruppe |
| CI | Kritizitätsindex |
| CP | prognostizierter Zustandswert einer physikalischen Risikogruppe |
| DP | Kenngrößendaten |
| HI | Health-Index |
| KP | zweite Parameterdaten |
| m, n | Indizes |
| RI | erweiterter Zustandsindex |
| SP | erste Parameterdaten |
| t+$\Delta$t | zukünftiger Zeitpunkt |
| WCP | Gewichtungsfaktor |
| WHI | Gewichtungsfaktor |
| WKP | Gewichtungsfaktor |

**Patentansprüche**

1. Verfahren zur Einsatzplanung von Betriebsmitteln (101, 102, 103, 104, 105, 106), die jeder Netzknoten (10) eines elektrischen Systems (20) zur Energieversorgung umfasst, wobei die Betriebsmittel (101, 102, 103, 104, 105, 106) regelbare Leistungstransformatoren, Leistungsschalter, verschiedene Trennschalter, eine Zuleitung aus einem übergeordneten bzw. versorgenden Netz sind, wobei die Trennschalter und die Leistungsschalter, sowohl eingangsseitig als auch ausgangsseitig, mit den Leistungstransformatoren verbunden sind und Abgänge zur Versorgung nachgelagerter Energieversorgungsnetze umfassen und jeder Netzknoten (10) eine lokale Auswerteeinrichtung (201) besitzt, die zur Erfassung, Auswertung und Kommunikation von Betriebsmittel- und Umgebungsdaten dient, und die durch die lokalen Auswerteeinrichtungen (201) erfassten und verarbeiteten Daten über bidirektionalen Kommunikationsleitungen (205) sowohl an ein zentrales Datenbanksystem (203) als auch an ein übergeordnetes SCADA-System (202) übermittelt werden, die beide über bidirektionale Kommunikationsleitungen (205) und jeweils mit einer übergeordneten Auswerteeinrichtung (204) verbunden sind, wobei

   - ein zukünftiger Zeitpunkt (t+Δt) von der übergeordneten Auswerteeinrichtung (204) vorgegeben wird, der über das übergeordnete SCADA-System (202) an die lokalen Auswerteeinrichtungen (201) gesendet wird;
   - für jedes der Betriebsmittel (101... 106)

       • erste Parameterdaten SP ermittelt werden, die die technische Beschaffenheit des jeweiligen Betriebsmittels (101... 106) beschreiben;
       • zweite Parameterdaten KP ermittelt werden, die die Relevanz des jeweiligen Betriebsmittels (101... 106) im Vergleich zu den übrigen Betriebsmitteln (101... 106) beschreiben;
       • Kenngrößendaten DP(t) des jeweiligen Betriebsmittels (101... 106), die den aktuellen technischen Zustand des jeweiligen Betriebsmittels (101... 106) beschreiben, werden kontinuierlich durch die lokale Auswerteeinrichtung (201) erfasst;
       • in der lokalen Auswerteeinrichtung (201) oder der übergeordneten Auswerteeinrichtung (204) mit Hilfe einer ersten Formel

$$HI(t + \Delta t)_{average,i} = \sum_{m=1} WHI_m * CHI(t + \Delta t)_{Average,m}[\%]$$

       aus einem prognostizierten Gesamtzustand $CHI_m$ für jede Risikogruppe m und für den zukünftigen Zeitpunkt (t+Δt), der sich aus den ersten Parameterdaten SP und seinen Kenngrößendaten DP(t) ermittelt, in Ver-bindung mit einem Gewichtungsfaktor $WHI_m$ für das jeweils betrachtete Betriebsmittel ein prognostizierter Health-Index $HI_i$ ermittelt wird, der den prognostizierten Zustand dieses Betriebsmittels (101... 106) für den zukünftigen Zeitpunkt (t+Δt) darstellt;
       • in der lokalen Auswerteeinrichtung (201) oder der übergeordneten Auswerteeinrichtung (204) mit Hilfe einer zweiten Formel

$$CI_{Average,i} = \sum_{n=1} WKP_n * KP_n$$

       aus den zweiten Parameterdaten KP in Verbindung mit einem Gewichtungsfaktor $WKP_n$ für einzelne zweite Parameterdaten ein Kritizitätsindex $CI_i$ ermittelt wird;
       • in der lokalen Auswerteeinrichtung (201) oder der übergeordneten Auswerteeinrichtung (204) mit Hilfe einer dritten Formel

$$RI_i(t + \Delta t) = HI_{average,i}(t + \Delta t) * CI_{Average,i}$$

       aus dem prognostizierten Health-Index $HI_i$ und dem Kritizitätsindex $CI_i$ ein erweiterter Zustandsindex $RI_i$ ermittelt wird, der eine prognostizierte Risikoanalyse der Betriebsmittel (101... 106) darstellt;

   - für das elektrische System (20)

       • anhand des erweiterten Zustandsindex $RI_i$ in der übergeordneten Auswerteeinrichtung (204) eine prognostizierende Bewertung der Stabilität und/oder Verfügbarkeit für den zukünftigen Zeitpunkt (t+∆t) durchgeführt wird;

• die Bewertung der Stabilität und/oder Verfügbarkeit durch die übergeordnete Auswerteeinrichtung (204), gemäß einem (N-x)-Kriterium, das erfüllt ist, wenn bei Ausfall von x Betriebsmitteln die uneingeschränkte Funktionsfähigkeit des elektrischen Systems bestehen bleibt, erfolgt;

• die Erfüllung des (N-x)-Kriteriums in Abhängigkeit der Zeit t geprüft wird, indem eine Funktion f(t+∆t) in der übergeordneten Auswerteeinrichtung (204) zur Prognose des erwarteten Netzzustandes genutzt wird; und

• die übergeordnete Auswerteeinrichtung (204) Handlungsempfehlungen generiert, die einen Eingriff in die Netztopologie und/oder das Zuschalten mindestens eines Betriebsmittels (101... 106) und/oder das Abschalten mindestens eines Betriebsmittels (101... 106) und/oder eine optimierte Auslastung der Betriebsmittel (101...106) und/oder ein optimiertes Wartungskonzept und/oder ein optimiertes Reparaturkonzept und/oder einen Betrieb der Betriebsmittel (101... 106) zur verbesserten Stabilität und/oder Verfügbarkeit umfassen.

2. Verfahren nach Anspruch 1, wobei die übergeordnete Auswerteeinrichtung (204) die generierten Handlungsempfehlungen dem Bediener mittels einer Mensch-Maschine-Schnittstelle, zur Verfügung gestellt werden.

3. Verfahren nach Anspruch 1, wobei die übergeordnete Auswerteeinrichtung (204) mit einem E-Mail-Client oder einem E-Mail-Programm zusammenwirkt und die generierten Handlungsempfehlungen automatisiert an einen vorbestimmten Empfängerkreis versandt werden.

4. Verfahren nach einem der vorigen Ansprüche, wobei

   - zur Erstellung der ersten Formel, physikalische Risikogruppen gebildet werden, die Mechanik und/oder Thermik und/oder Dieelektrik und/oder das Betriebsmittel, das ein Stufenschalter (102) ist, und/oder Durchführung und/oder Kühlung und/oder weitere Gruppen umfassen;
   - für die Bildung der einzelnen Risikogruppen spezifische mathematische Modelle zur Zustandsanalyse und Charakterisierung genutzt werden;
   - die erste Formel ein thermisches Alterungsmodell des Betriebsmittels, das ein Transformator (101) ist, oder eine Freileitung ist, ist und/oder Regeln zur Modellierung der mechanischen Belastung in dem Betriebsmittel, das ein Transformator (101) ist, und/oder Regeln zur DGA-Analyse umfasst.

5. Verfahren nach einem der vorigen Ansprüche, wobei

   - die Kenngrößen des Betriebsmittels, das ein Transformator (101) ist, den Laststrom, die Temperatur des Transformatorisolieröls und/oder die Umgebungstemperatur und/oder die Gaskonzentration im Isolieröl des Transformators (101) und/oder die Momentanleistung des Transformators (101) umfassen.

6. Verfahren nach einem der vorigen Ansprüche, wobei

   - die Abtastraten zwischen zwei Messzeitpunkten für die Ermittlung von Parameterdaten um mehrere Größenordnungen größer sind als die Abtastraten zwischen zwei Messzeitpunkten für die Ermittlung von Kenngrößendaten.

7. Verfahren nach einem der vorigen Ansprüche, wobei

   - die ersten Parameterdaten SP eines Betriebsmittels (101... 106) die Leerlaufspannung des Betriebsmittels (101... 106) und/oder die Kurzschlussspannung des Betriebsmittels (101... 106) und/oder durch visuelle Inspektion ermittelte Daten des Betriebsmittels (101... 106) umfassen;
   - die zweiten Parameterdaten KP eines Betriebsmittels (101... 106) die Spannungsebene des Betriebsmittels (101... 106) und/oder die Kosten für einen Betriebsmitteltausch und/oder die Reaktionszeiten von Servicepersonal und/oder die Topologie der Abschnitte des Systems, die an das Betriebsmittel (101... 106) angeschlossen sind, und/oder die Versorgungssicherheit der Abschnitte des Systems, die an das Betriebsmittel (101... 106) angeschlossen sind, und/oder die Wichtigkeit des Betriebsmittels (101 ... 106) für einen Endkunden und/oder die Redundanz der Abschnitte des Systems, die an das Betriebsmittel (101... 106) angeschlossen sind, und/oder die wirtschaftlichen und/oder ökologischen Folgen eines Ausfalls des Betriebsmittels (101... 106) umfassen.

8. Verfahren nach einem der vorigen Ansprüche, wobei

   - die zweiten Parameterdaten KP in einem zentralen Datenbanksystem (203) oder einer Netzknotendatenbank gespeichert werden.

9. Elektrisches System (20) zur Energieversorgung, umfassend:

   - mehrere Netzknoten (10), wobei jeder Netzknoten (10) mehrere Betriebsmittel (101, 102, 103, 104, 105, 106), wie beispielsweise Transformatoren (101), Leistungsschalter (102), verschiedene Trennschalter (103, 104), Stromleitungen (105, 106, 12a, 12b, 12c), aufweist;
   - eine lokale Auswerteeinrichtung (201) für jeden Netzknoten (10) zur Erfassung, Auswertung und Kommunikation von Betriebsmittel- und Umgebungsdaten;
   eine Steuerungsanlage (200), die die lokalen Auswerteeinrichtung (201) der Netzknoten (10), ein übergeordnetes SCADA-System (202), eine übergeordnete Auswerteeinrichtung (204), ein zentrales Datenbanksystem (203) und bidirektionale Kommunikationsleitungen (205) besitzt, wobei die lokalen Auswerteeinrichtung (201) über die bidirektionalen Kommunikationsleitungen (205) mit dem übergeordneten SCADA-System (202) und dem zentralen Datenbanksystem (203) verbunden sind und die übergeordnete Auswerteeinrichtung (204) über bidirektionale Kommunikationsleitungen (205) mit dem übergeordneten SCADA-System (202) und dem zentralen Datenbanksystem (203) verbunden sind; wobei die Steuerungsanlage (200) derart ausgebildet ist, dass eine Einsatzplanung der Betriebsmittel (101... 106) ausführbar ist;
   - einen zukünftigen Zeitpunkt (t+$\Delta$t) vorgibt;
   - für jedes Betriebsmittel (101... 106)

     • erste Parameterdaten SP ermittelt, die die technische Beschaffenheit des jeweiligen Betriebsmittels (101... 106) beschreiben;
     • zweite Parameterdaten KP ermittelt, die die Relevanz des jeweiligen Betriebsmittels (101... 106) im Vergleich zu den übrigen Betriebsmitteln (101... 106) beschreiben;
     • Kenngrößendaten DP(t) des jeweiligen Betriebsmittels (101... 106) sind durch die lokalen Auswerteeinrichtungen (201) erfassbar;
     • in der lokalen Auswerteeinrichtung (201) oder der übergeordneten Auswerteeinrichtung (204) ist mit Hilfe einer ersten Formel

$$HI(t + \Delta t)_{average,i} = \sum_{m=1} WHI_m * CHI(t + \Delta t)_{Average,m}[\%]$$

     aus einem prognostizierten Gesamtzustand $CHI_m$ für jede Risikogruppe m und für den zukünftigen Zeitpunkt (t+$\Delta$t), der sich aus den ersten Parameterdaten SP und den Kenngrößendaten DP(t) ermittelt, in Verbindung mit einem Gewichtungsfaktor $WHI_m$ für das jeweils betrachtete Betriebsmittel ein prognostizierter Health-Index $HI_i$ ermittelbar, der den prognostizierten Zustand dieses Betriebsmittels (101... 106) für den zukünftigen Zeitpunkt (t+$\Delta$t) darstellt;
     • in der lokalen Auswerteeinrichtung (201) oder der übergeordneten Auswerteeinrichtung (204) ist mit Hilfe einer zweiten Formel

$$CI_{Average,i} = \sum_{n=1} WKP_n * KP_n$$

     aus den zweiten Parameterdaten KP in Verbindung mit einem Gewichtungsfaktor $WKP_n$ für einzelne zweite Parameterdaten ein Kritizitätsindex $CI_i$ ermittelbar;
     • in der lokalen Auswerteeinrichtung (201) oder der übergeordneten Auswerteeinrichtung (204) ist mit Hilfe einer dritten Formel

$$RI_i(t + \Delta t) = HI_{average,i}(t + \Delta t) * CI_{Average,i}$$

     aus dem prognostizierten Health-Index $HI_i$ und dem Kritizitätsindex $CI_i$ ein erweiterter Zustandsindex $RI_i$ ermittelbar, der eine prognostizierte Risikoanalyse der Betriebsmittel (101... 106) darstellt;

- für das elektrische System (20)

• anhand des erweiterten Zustandsindex RI$_i$ in der übergeordneten Auswerteeinrichtung (204) eine prognostizierende Bewertung der Stabilität und/oder Verfügbarkeit für den zukünftigen Zeitpunkt durchführbar ist,
• die Bewertung der Stabilität und/oder Verfügbarkeit gemäß einem (N-x)-Kriterium, das erfüllt ist, wenn bei Ausfall von x Betriebsmitteln die uneingeschränkte Funktionsfähigkeit des elektrischen Systems bestehen bleibt, erfolgt,
• die Erfüllung des (N-x)-Kriteriums in Abhängigkeit der Zeit t prüfbar ist, indem eine Funktion f(t+Δt) in der übergeordneten Auswerteeinrichtung (204) zur Prognose des erwarteten Netzzustandes nutzbar ist, und
• die übergeordnete Auswerteeinrichtung (204) derart gestaltet ist, dass Handlungsempfehlungen generierbar sind, die einen Eingriff in die Netztopologie und/oder das Zuschalten mindestens eines Betriebsmittels (101... 106) und/oder das Abschalten mindestens eines Betriebsmittels (101... 106) und/oder eine optimierte Auslastung der Betriebsmittel (101... 106) und/oder ein optimiertes Wartungskonzept und/oder ein optimiertes Reparaturkonzept und/oder einen Betrieb der Betriebsmittel (101... 106) zur verbesserten Stabilität und/oder Verfügbarkeit umfassen.

10. Elektrisches System (20) nach Anspruch 9, wobei eine Mensch-Maschine-Schnittstelle einem Bediener die generierten Handlungsempfehlungen zur Verfügung stellt.

11. Elektrisches System (20) nach Anspruch 9, wobei die übergeordnete Auswerteeinrichtung (204) mit einem E-Mail-Client oder einem E-Mail-Programm zusammenwirkt, um die generierten Handlungsempfehlungen automatisiert an einen vorbestimmten Empfängerkreis zu versenden.

## Claims

1. Method for usage planning of operating means (101, 102, 103, 104, 105, 106), which each network node of an electrical system (20) for energy supply comprises, wherein the operating means (101, 102, 103, 104, 105, 106) are regulable power transformers, power switches, various isolating switches, a feed line from a superordinate or supplying network, wherein the isolating switches and the power switches are connected to the power transformers on the input side and on the output side and include output paths for supplying downstream energy supply networks and each network node (10) has a local evaluating device (201) that is used for the detection, evaluation and communication of operating means data and environment data and wherein the data detected and processed by the individual local evaluating devices (201) are communicated by way of bidirectional communication lines (205) to a central databank system (203) as well as to a superordinate SCADA system (202), which are both connected by way of bidirectional communication lines (205) and each connected to a superordinate evaluating device (204), wherein

- a future instant (t+Δt) is predetermined by the superordinate evaluating device (204), which is sent to the local evaluating device (201) via the superordinate SCADA system (202);
- for each operating means (101 ... 106)

• first parameter data SP describing the technical nature of the respective operating means (101 ... 106) are determined;
• second parameter data KP describing the relevance of the respective operating means (101 ... 106) in comparison with the remaining operating means (101 ... 106) are determined;
• characteristic value data DP(t) of the respective operating means (101 ... 106), which describe the current technical condition of the respective operating means (101 ... 106), are continuously recorded by the local evaluating device (201);
• in the local evaluating device (201) or the superordinate SCADA system (202) a first mathematic rule

$$HI(t + \Delta t)_{average,i} = \sum_{m=1} WHI_m * CHI(t + \Delta t)_{Average,m} [\%]$$

is used to determine a predicted health index HI$_i$ of the operating means (101 ... 106) which is determined from a predicted overall state CHI$_m$ for each of a risk group m and for the future instant (t+Δt) which is determined from the first parameter data SP and its characteristic value data DP(t), and under consideration of a weighting factor $WHI_m$ the predicted health index $HI_i$ representing the predicted state of the operating means (101 ....106) for the future instant (t+$\Delta$t)
• in the local evaluating device (201) or the superordinate SCADA system (202) a second mathematic rule

$$CI_{Average,i} = \sum_{n=1} WKP_n * KP_n$$

is used to determine a criticality index $CI_i$ from the second parameter data KP in connection with a weighting factor $WKP_n$ for individual second parameter data;
• in the local evaluation device (201) or the superordinate SCADA system (202) a third mathematic rule

$$RI_i(t + \Delta t) = HI_{average,i}(t + \Delta t) * CI_{Average,i}$$

is used to determine an expanded state index $RI_i$ from the predicted health index $HI_i$ and the criticality index $CI_i$ representing a predicted risk analysis of the operating means (101 ... 106)

- for the electrical system (20)

• a predictive assessment of the stability and/or serviceability for the future instant (t+$\Delta$t) is carried out in the superordinate evaluating device (204) on the basis of the expanded state index $RI_i$;
• the assessment of the stability and/or serviceability is carried out by the superordinate evaluating device (204), in accordance to a (N-x) criterion, which is fulfilled if, in the case of failure of x operating means of the electrical system (20), an unrestricted functional capability of the electrical system (20) remains;
• the fulfilment of the (N-x) criterion is checked in dependence on the time t, in that a function f(t+$\Delta$t) for prediction of the anticipated network state is used in the superordinate evaluating device (204); and
• handling recommendations are generated via the superordinate evaluating device (204), which comprise an intervention in the network topology and/or switching-on of at least one operating means (101 ... 106) and/or switching-off of at least one operating means (101 ... 106) and/or optimised capacity utilisation of the operating means (101 ... 106) and/or an optimised maintenance concept and/or an optimised repair concept and/or operation of the operating means (101 ... 106) for improved stability and/or serviceability.

2. Method according to claim 1, wherein the generated handling recommendations are made available to the operator by means of a man/machine interface by the superordinate evaluating device (204)

3. Method according to claim 1, wherein the superordinate evaluating device (204) co-operates with an e-mail client or e-mail program and the generated handling recommendations are automatically sent to a predetermined receiver circle.

4. Method according to one of the preceding claims, wherein

- physical risk groups comprising the mechanics and/or thermics and/or dielectrics and/or the operating means which is a tap changer (102) and/or bushing and/or cooling and/or further groups are formed for creating the first mathematical rule;
- specific mathematical models for state analysis and characterisation are used for forming the individual risk groups;
- the first mathematical rule comprises a thermal ageing model of an operating means which is a transformer (101) or of an overhead line and/or rules for modelling the mechanical load in the operating means which is a transformer (101) and/or rules for DGA analysis.

5. Method according to any one of the preceding claims, wherein

- the characteristic values of the operating means which is a transformer (101) comprise the load current, the temperature of the transformer insulating oil and/or the ambient temperature and/or the gas concentration in the insulating oil of the transformer (101) and/or the instantaneous performance of the transformer (101).

6. Method according to any one of the preceding claims, wherein

- the scanning rates between two measuring instants for determination of parameter data are greater by several orders or magnitude than the scanning rates between two measuring instants for determination of characteristic value data.

7. Method according to any one of the preceding claims, wherein

- the first parameter data SP of an operating means (101 ... 106) comprise the open-circuit voltage of the operating means (101 ... 106) and/or the short-circuit voltage of the operating means (101 ... 106) and/or data, which are determined by visual inspection, of the operating means (101 ... 106);
- the second parameter data KP of an operating means (101 ... 106) comprise the voltage level of the operating means (101 ... 106) and/or the costs for operating means exchange and/or the reaction times of service personnel and/or the topology of the sections of the system connected with the operating means (101 ... 106) and/or the supply reliability of the sections of the system connected with the operating means (101 ... 106) and/or the importance of the operating means (101 ... 106) for an end customer and/or the redundancy of the sections of the system connected with the operating means (101 ... 106) and/or the economic and/or ecological consequences of failure of the operating means (101 ... 106).

8. Method according to any one of the preceding claims, wherein

- the second parameter data KP are stored in a central databank system (203) or a network node databank.

9. Electrical system (20) for energy supply, comprising:

- a plurality of network nodes (10), wherein each network node (10) comprises a plurality of operating means (101, 102, 103, 104, 105, 106) such as, for example, transformers (101), power switches (102), isolating switches (103, 104), power lines (105, 106, 12a, 12b, 12c);
- a local evaluating device (201) for each network node (10) for detection, evaluation and communication of operating means data and environmental data;

    - a control system (200) comprising the local evaluating devices (201) of the network nodes (10), a superordinate SCADA system (202), a superordinate evaluating device (204), a central databank system (203) and bidirectional communication lines (205), wherein the local evaluating device (201) is connected with the superordinate SCADA system (202) and the central databank system (203) by the bidirectional communication lines (205) and the superordinate evaluating device (204) is connected with the superordinate SCADA system (202) and the central databank system (203) by the bidirectional communication lines (205); wherein the control system (200) is so constructed that it can execute a usage planning of the operating means (101 ... 106), in accordance with which it

- predetermines a future instant (t+Δt);
- for each operating means (101 ... 106)

    • determines first parameter data SP describing the technical nature of the respective operating means (101 ... 106);
    • determines second parameter data KP describing the relevance of the respective operating means (101 ... 106) compared with the remaining operating means (101 ... 106);
    • characteristic value data DP(t) of the respective operating means (101 ... 106), which describe the current technical state of the respective operating means (101... 106), are detectable continuously by the local evaluating device (201);
    • in the local evaluating device (201) or the superordinate SCADA system (202) a first mathematic rule

$$HI(t + \Delta t)_{average,i} = \sum_{m=1} WHI_m * CHI(t + \Delta t)_{Average,m} [\%]$$

is used to determine a predicted health index $HI_i$ of the operating means (101 ... 106) which is determined from a predicted overall state $CHI_m$ for each of a risk group m and for the future instant (t+Δt) which is determined from the first parameter data SP and its characteristic value data DP(t), and under consideration of a weighting factor $WHI_m$ the predicted health index $HI_i$ representing the predicted state of the operating means (101....106) for the future instant (t+Δt)

• in the local evaluating device (201) or the superordinate SCADA system (202) a second mathematic rule

$$CI_{Average,i} = \sum_{n=1} WKP_n * KP_n$$

is used to determine a criticality index $CI_i$ from the second parameter data KP in connection with a weighting factor $WKP_n$ for individual second parameter data;

• in the local evaluating device (201) or the superordinate SCADA system (202) a third mathematic rule

$$RI_i(t + \Delta t) = HI_{average,i}(t + \Delta t) * CI_{Average,i}$$

is used to determine an expanded state index $RI_i$ from the predicted health index $HI_i$ and the criticality index $CI_i$. representing a predicted risk analysis of the operating means (101 ... 106)

- for the electrical system (20)

• a predictive assessment of the stability and/or serviceability for the future instant on the basis of the expanded state index $RI_i$ is performable

• the assessment of the stability and/or serviceability is carried out in accordance to a (N-x) criterion, which is fulfilled if, in the case of failure of x operating means of the electrical system (20) an unrestricted functional capability of the electrical system (20) remains;

• the fulfilment of the (N-x) criterion is checkable in dependence on the time t, in that a function f(t+Δt) for prediction of the anticipated network state is used in the superordinate evaluating device (204); and

• the superordinate evaluating device (204) is designed in a way, that handling recommendations can be generated , which comprise intervention in the network topology and/or switching-on of at least one operating means (101 ... 106) and/or switching-off of at least one operating means (101 ... 106) and/or optimised capacity utilisation of the operating means (101 ... 106) and/or an optimised maintenance concept and/or an optimised repair concept and/or operation of the operating means (101 ... 106) for improved stability and/or serviceability.

10. Electrical System (20) according to claim 9, wherein generated handling recommendations are made available to an operator by means of a man/machine interface.

11. Electrical System (20) according to claim 9, wherein the superordinate evaluating device (204) co-operates with an e-mail client or e-mail program and the generated handling recommendations are automatically sent to a predetermined receiver circle.

**Revendications**

1. Procédé de planification de l'utilisation de matériels (101, 102, 103, 104, 105, 106) que comporte chaque noeud de réseau (10) d'un système électrique (20) destiné à la distribution d'énergie, les matériels (101, 102, 103, 104, 105, 106) étant des transformateurs de puissance régulables, des commutateurs de puissance, différents sectionneurs, une ligne d'arrivée depuis un réseau de niveau supérieur ou alimentant, les sectionneurs et les commutateurs de puissance étant reliés à la fois du côté de l'entrée et du côté de la sortie avec les transformateurs de puissance et comportant des départs destinés à l'alimentation de réseaux de distribution d'énergie en aval et chaque noeud de réseau (10) possédant un dispositif d'interprétation (201) local, lequel sert à acquérir, interpréter et communiquer des données de matériel et d'environnement, et les données acquises et traitées par les dispositifs d'interprétation (201) locaux étant communiquées par le biais de lignes de communication bidirectionnelles (205) à la fois à un système de base de données central (203) ainsi qu'à un système SCADA (202) de niveau supérieur, les deux étant reliés par le biais de lignes de communication bidirectionnelles (205) et respectivement à un dispositif d'interprétation (204) de niveau supérieur,

- un instant futur (t+Δt) étant prédéfini par le dispositif d'interprétation (204) de niveau supérieur, lequel est envoyé aux dispositifs d'interprétation (201) locaux par le biais du système SCADA (202) de niveau supérieur ;
- pour chaque matériel (101 ... 106)

* des premières données de paramètre SP étant déterminées, lesquelles décrivent la nature technique du matériel (101 ... 106) respectif ;

* des deuxièmes données de paramètre KP étant déterminées, lesquelles décrivent la pertinence du matériel (101 ... 106) en comparaison des autres matériels (101 ... 106) ;

* des données de grandeur caractéristique DP(t) du matériel (101 ... 106) respectif, lesquelles décrivent l'état technique actuel du matériel (101 ... 106) respectif, étant continuellement acquises par le dispositif d'interprétation (201) local ;

* dans le dispositif d'interprétation (201) local ou le dispositif d'interprétation (204) de niveau supérieur, à l'aide d'une première formule

$$HI(t + \Delta t)_{average,i} = \sum_{m=1} WHI_m * CHI(t + \Delta t)_{Average,m} \; [\%],$$

un indice de santé prévisionnel $HI_i$, lequel représente l'état prévisionnel de ce matériel (101 ... 106) pour l'instant futur (t+$\Delta$t), étant déterminé à partir d'un état général prévisionnel $CHI_m$ pour chaque groupe de risques m et pour l'instant futur (t+$\Delta$t), lequel se détermine à partir des premières données de paramètre SP et de ses données de grandeur caractéristique DP(t), en association avec un facteur de pondération $WHI_m$ pour le matériel respectivement considéré ;

* dans le dispositif d'interprétation (201) local ou le dispositif d'interprétation (204) de niveau supérieur, à l'aide d'une deuxième formule

$$CI_{Average,i} = \sum_{n=1} WKP_n * KP_n,$$

un indice de caractère critique $CI_i$ étant déterminé à partir des deuxièmes données de paramètre KP en association avec un facteur de pondération $WKP_n$ pour les données de paramètre individuelles ;

* dans le dispositif d'interprétation (201) local ou le dispositif d'interprétation (204) de niveau supérieur, à l'aide d'une troisième formule

$$RI_i(t + \Delta t) = HI_{average,i}(t + \Delta t) * CI_{Average,i},$$

un indice d'état étendu $RI_i$, lequel représente une analyse des risques prévisionnelle du matériel (101 ... 106), étant déterminé à partir de l'indice de santé prévisionnel $HI_i$ et de l'indice de caractère critique $CI_i$, ;

- pour le système électrique (20)

* une évaluation prévisionnelle de la stabilité et/ou de la disponibilité pour l'instant futur (t+$\Delta$t) étant réalisée dans le dispositif d'interprétation (204) de niveau supérieur à l'aide de l'indice d'état étendu $RI_i$ ;

* l'évaluation de la stabilité et/ou de la disponibilité par le dispositif d'interprétation (204) de niveau supérieur s'effectuant conformément à un critère (N-x), qui est satisfait lorsque, en cas de panne de x matériels, l'aptitude fonctionnelle non restreinte du système électrique reste maintenue ;

* la satisfaction du critère (N-x) étant vérifiée en fonction du temps t en utilisant une fonction f(t+$\Delta$t) dans le dispositif d'interprétation (204) de niveau supérieur pour la prévision de l'état de réseau attendu ; et

* le dispositif d'interprétation (204) de niveau supérieur générant des recommandations d'action, qui comprennent une intervention dans la topologie du réseau et/ou la mise en circuit d'au moins un matériel (101 ... 106) et/ou la déconnexion d'au moins un matériel (101 ... 106) et/ou un taux d'utilisation optimisé des matériels (101 ... 106) et/ou un concept de maintenance optimisé et/ou un concept de réparation optimisé et/ou un fonctionnement des matériels (101 ... 106) en vue d'une meilleure stabilité et/ou disponibilité.

**2.** Procédé selon la revendication 1, le dispositif d'interprétation (204) de niveau supérieur mettant les recommandations d'action générées à la disposition de l'opérateur au moyen d'une interface homme-machine.

**3.** Procédé selon la revendication 1, le dispositif d'interprétation (204) de niveau supérieur coopérant avec un client de messagerie électronique ou un programme de messagerie électronique et les recommandations d'action générées étant envoyées de manière automatisée à un groupe de destinataires prédéterminé.

**4.** Procédé selon l'une des revendications précédentes,

- des groupes de risques physiques étant formés en vue d'établir la première formule, lesquelles comprennent la mécanique et/ou la thermique et/ou la diélectrique et/ou le matériel, qui est un commutateur à gradins (102), et/ou la réalisation et/ou le refroidissement et/ou d'autres groupes ;
- des modèles mathématiques spécifiques servant à l'analyse d'état et à la caractérisation étant utilisée pour la formation des groupes de risques individuels ;
- la première formule étant un modèle de vieillissement thermique du matériel, lequel est un transformateur (101) ou une ligne aérienne, et/ou comprenant des règles de modélisation de la charge mécanique dans le matériel, lequel est un transformateur (101), et/ou des règles servant à une analyse DGA.

**5.** Procédé selon l'une des revendications précédentes,

- les grandeurs caractéristiques du matériel, lequel est un transformateur (101), comprenant le courant de charge, la température de l'huile isolante de transformateur et/ou la température ambiante et/ou la concentration de gaz dans l'huile isolante du transformateur (101) et/ou la puissance momentanée du transformateur (101).

**6.** Procédé selon l'une des revendications précédentes,

- les fréquences d'échantillonnage entre deux instants de mesure pour la détermination de données de paramètre étant supérieures de plusieurs ordres de grandeur aux fréquences d'échantillonnage entre deux instants de mesure pour la détermination de données de grandeurs caractéristiques.

**7.** Procédé selon l'une des revendications précédentes,

- les premières données de paramètre SP d'un matériel (101 ... 106) comprenant la tension à vide du matériel (101 ... 106) et/ou la tension de court-circuit du matériel (101 ... 106) et/ou des données du matériel (101 ... 106) déterminées par inspection visuelle ;
- les deuxièmes données de paramètre KP d'un matériel (101 ... 106) comprenant le niveau de tension du matériel (101 ... 106) et/ou les coûts pour un remplacement de matériel et/ou les temps de réaction du personnel d'entretien et/ou la topologie des portions du système qui sont raccordées au matériel (101 ... 106) et/ou la sécurité d'alimentation des portions du système qui sont raccordées au matériel (101 ... 106) et/ou l'importance du matériel (101 ... 106) pour un client final et/ou la redondance des portions du système qui sont raccordées au matériel (101 ... 106) et/ou les conséquences économiques et/ou écologiques d'une panne du matériel (101 ... 106) .

**8.** Procédé selon l'une des revendications précédentes,

- les deuxièmes données de paramètre KP étant enregistrées dans un système de base de données central (203) ou une base de données de noeud de réseau.

**9.** Système électrique (20) destiné à la distribution d'énergie, comprenant :

- plusieurs noeuds de réseau (10), chaque noeud de réseau (10) possédant plusieurs matériels (101, 102, 103, 104, 105, 106), comme par exemple des transformateurs (101), des commutateurs de puissance (102), différents sectionneurs (103, 104), des lignes électriques (105, 106, 12a, 12b, 12c) ;
- un dispositif d'interprétation (201) local pour chaque noeud de réseau (10), servant à acquérir, interpréter et communiquer des données de matériel et d'environnement ;
une installation de commande (200), laquelle possède le dispositif d'interprétation (201) local des noeuds de réseau (10), un système SCADA (202) de niveau supérieur, un dispositif d'interprétation (204) de niveau supérieur, un système de base de données central (203) et des lignes de communication bidirectionnelles (205), les dispositifs d'interprétation (201) locaux étant reliés par le biais des lignes de communication bidirectionnelles (205) au système SCADA (202) de niveau supérieur et au système de base de données central (203) et le dispositif d'interprétation (204) de niveau supérieur étant relié par le biais de lignes de communication bidirectionnelles (205) au système SCADA (202) de niveau supérieur et au système de base de données central (203) ; l'installation de commande (200) étant configurée de telle sorte qu'une planification de l'utilisation de matériels (101 ... 106) peut être exécutée ;
- prédéfinit un instant futur (t+∆t) ;

- pour chaque matériel (101 ... 106)

   * détermine des premières données de paramètre SP, lesquelles décrivent la nature technique du matériel (101 ... 106) respectif ;
   * détermine des deuxièmes données de paramètre KP, lesquelles décrivent la pertinence du matériel (101 ... 106) en comparaison des autres matériels (101 ... 106) ;
   * des données de grandeur caractéristique DP(t) du matériel (101 ... 106) respectif peuvent être acquises par les dispositifs d'interprétation (201) locaux ;
   * dans le dispositif d'interprétation (201) local ou le dispositif d'interprétation (204) de niveau supérieur, à l'aide d'une première formule

$$HI(t + \Delta t)_{average,i} = \sum_{m=1} WHI_m * CHI(t + \Delta t)_{Average,m} \ [\%],$$

   un indice de santé prévisionnel $HI_i$, lequel représente l'état prévisionnel de ce matériel (101 ... 106) pour l'instant futur (t+$\Delta$t), peut être déterminé à partir d'un état général prévisionnel $CHI_m$ pour chaque groupe de risques m et pour l'instant futur (t+$\Delta$t), lequel se détermine à partir des premières données de paramètre SP et des données de grandeur caractéristique DP(t), en association avec un facteur de pondération $WHI_m$ pour le matériel respectivement considéré ;
   * dans le dispositif d'interprétation (201) local ou le dispositif d'interprétation (204) de niveau supérieur, à l'aide d'une deuxième formule

$$CI_{Average,i} = \sum_{n=1} WKP_n * KP_n,$$

   un indice de caractère critique $CI_i$ peut être déterminé à partir des deuxièmes données de paramètre KP en association avec un facteur de pondération $WKP_n$ pour les données de paramètre individuelles ;
   * dans le dispositif d'interprétation (201) local ou le dispositif d'interprétation (204) de niveau supérieur, à l'aide d'une troisième formule

$$RI_i(t + \Delta t) = HI_{average,i}(t + \Delta t) * CI_{Average,i},$$

   un indice d'état étendu $RI_i$, lequel représente une analyse des risques prévisionnelle du matériel (101 ... 106), peut être déterminé à partir de l'indice de santé prévisionnel $HI_i$ et de l'indice de caractère critique $CI_i$, ;

- pour le système électrique (20)

   * une évaluation prévisionnelle de la stabilité et/ou de la disponibilité pour l'instant futur peut être réalisée dans le dispositif d'interprétation (204) de niveau supérieur à l'aide de l'indice d'état étendu $RI_i$ ;
   * l'évaluation de la stabilité et/ou de la disponibilité est effectuée conformément à un critère (N-x), qui est satisfait lorsque, en cas de panne de x matériels, l'aptitude fonctionnelle non restreinte du système électrique reste maintenue ; et
   * la satisfaction du critère (N-x) peut être vérifiée en fonction du temps t en ce qu'une fonction f(t+$\Delta$t) peut être utilisée dans le dispositif d'interprétation (204) de niveau supérieur pour la prévision de l'état de réseau attendu ; et
   * le dispositif d'interprétation (204) de niveau supérieur est configuré de telle sorte que des recommandations d'action peuvent être générées, lesquelles comprennent une intervention dans la topologie du réseau et/ou la mise en circuit d'au moins un matériel (101 ... 106) et/ou la déconnexion d'au moins un matériel (101 ... 106) et/ou un taux d'utilisation optimisé des matériels (101 ... 106) et/ou un concept de maintenance optimisé et/ou un concept de réparation optimisé et/ou un fonctionnement des matériels (101 ... 106) en vue d'une meilleure stabilité et/ou disponibilité.

10. Système électrique (20) selon la revendication 9, une interface homme-machine mettant les recommandations d'action générées à la disposition d'un opérateur.

**11.** Système électrique (20) selon la revendication 9, le dispositif d'interprétation (204) de niveau supérieur coopérant avec un client de messagerie électronique ou un programme de messagerie électronique afin d'envoyer les recommandations d'action générées de manière automatisée à un groupe de destinataires prédéterminé.

**FIG. 1**

FIG. 2

EP 3 574 458 B1

FIG. 3

EP 3 574 458 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004090764 A1

- WO 2009042581 A1

**In der Beschreibung aufgeführte Nicht-Patentliteratur**

- **MARKUS BAUER.** *Individuelles Online-Monitoring für Transformatoren,* 19. Februar 2014
- **MARKUS BAUER.** *Vattenfall setzt im Kraftwerk Boxberg auf das MR-Flottenmonitoring,* 18. Mai 2016
- **FENG H. et al.** Intelligent Control of On-Load Tap-Changer Based on Voltage Stability Margin Estimation Using Local Measurements. *CIGRE SES-SION,* 2016
- **KAP-TUE KAMGA A.** Regelzonenübergreifendes Netzengpassmanagement mit optimalen Topologiemaßnahmen. *Wuppertal,* 2009

- Life Management Techniques for Power Transformer. CIGRE. CIGRE WORKING GROUP, Juni 2003
- Guide on Transformer Intelligent Condition Monitoring (TCIM) Systems. CIGRE. CIGRE WORKING GROUP, September 2015
- Life Management Techniques for Power Transformer. CIGRE. Druckschrift CIGRE WORKING GROUP, Juni 2003